(19) Europäisches Patentamt / European Patent Office / Office européen des brevets

(11) **EP 4 678 326 A1**

(12) **EUROPEAN PATENT APPLICATION**
published in accordance with Art. 153(4) EPC

(43) Date of publication:
**14.01.2026 Bulletin 2026/03**

(21) Application number: **24845180.9**

(22) Date of filing: **27.05.2024**

(51) International Patent Classification (IPC):
**B23K 20/12** (2006.01)    **C22C 38/00** (2006.01)
**C22C 38/60** (2006.01)

(52) Cooperative Patent Classification (CPC):
**B23K 20/122; B23K 20/2333; C22C 38/00;
C22C 38/60**

(86) International application number:
**PCT/JP2024/019446**

(87) International publication number:
**WO 2025/022798 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 JP 2023121096**

(71) Applicant: **JFE STEEL CORPORATION
Tokyo
100-0011 (JP)**

(72) Inventors:
• **TANIGUCHI Koichi
Tokyo 100-0011 (JP)**
• **TOMITA Kai
Tokyo 100-0011 (JP)**

(74) Representative: **Haseltine Lake Kempner LLP
Bürkleinstrasse 10
80538 München (DE)**

(54) **FRICTION STIR WELDED JOINT**

(57)    A friction stir welded joint is provided that uses a mainly ferrite steel sheet as material to be joined and has excellent joint efficiency. A ratio of an average dislocation density of a joined portion to an average dislocation density of a base metal is appropriately controlled.

*FIG. 1*

0°          2.5°

Base metal          Joined portion

EP 4 678 326 A1

**Description**

TECHNICAL FIELD

The present disclosure relates to a friction stir welded joint.

BACKGROUND

In friction stir welding such as double-sided friction stir welding, material to be joined is joined as follows. A pair of rotating tools are disposed at the front side and back side of material to be joined consisting of at least two or more metal sheets. The rotating tools are then pressed against the front surface and the back surface of the material to be joined, and are moved in a joining direction while being rotated. This allows the metal sheets to be softened by the frictional heat between the rotating tools and the material to be joined, and the softened portion is then stirred by the rotating tools. Plastic flow is caused in the region of a join portion of the material to be joined, thereby joining the material to be joined. Hereinafter, a region where the material to be joined is butted or overlapped and not yet joined is referred to as an "unjoined portion", and a region that has been joined and integrated is referred to as a "joined portion".

As a technique related to such friction stir welding, for example, Patent Literature (PTL) 1 describes: "a friction stir welding method comprising, in friction stir welding where two steel sheets are butted or lapped: setting a rotational speed R of a tool rotating in the friction stir welding to more than 5 rpm and less than 5000 rpm; setting a leading edge temperature T of the steel sheets contacting a leading edge in an advancing direction of the tool to 25 °C or higher; setting a shoulder diameter D of the tool to 8 mm to 40 mm; and setting a welding speed V associated with the advancing of the tool to 0.1 m/min to 5 m/min".

CITATION LIST

Patent Literature

PTL 1: JP 2019-166569 A

SUMMARY

(Technical Problem)

However, in conventional friction stir welding methods such as that described in PTL 1, when a steel sheet having a metallic microstructure that is mainly ferrite (hereinafter also referred to as a mainly ferrite steel sheet) is used as the material to be joined, sufficient joint efficiency cannot be obtained. Therefore, there is currently a demand for improvement in this regard.

The present disclosure was developed in consideration of the above-mentioned circumstances, and it would be helpful to provide a friction stir welded joint that uses a mainly ferrite steel sheet as material to be joined (in other words, the base metal has a metallic microstructure that is mainly ferrite) and has excellent joint efficiency. Hereinafter, any numerical range expressed using "to" means a range that includes the numerical values before and after "to" as the lower limit value and the upper limit value, respectively.

(Solution to Problem)

The inventors conducted intensive studies to solve the technical problem outlined above. First, the inventors investigated reasons why, in a conventional friction stir welding method, excellent joint efficiency cannot be obtained in a friction stir welded joint in which mainly ferrite steel sheets are the material to be joined. Specifically, the inventors carried out friction stir welding under various conditions using various materials as the material to be joined, and analyzed the obtained friction stir welded joints using tensile tests and electron backscatter diffraction measurements (hereinafter also referred to as EBSD measurements).

As a result, the inventors have made the following discoveries. Microscopic dislocations introduced into the metallic microstructure of the joined portion during friction stir welding decreases microscopic ductility of the welded portion of the friction stir welded joint. This microscopic ductility decrease makes the joined portion more susceptible to fracture, in other words, leads to a decrease in joint efficiency.

The reason for this to be is considered to be as follows. That is, in a metallic microstructure that is mainly ferrite, hardness distribution normally does not change greatly. However, when there are regions with a microscopic ductility decrease in a metallic microstructure that is mainly ferrite, fractures occur due to the lack of ductility in those regions. This microscopic ductility decrease is largely due to an increase in microscopic dislocations at the joined portion introduced by heat treatment, working, and the like. Further, macroscopically, a mismatch between the joined portion and the base metal has an effect.

Further, based on the above discoveries and that ferrite grains in the joined portion of a friction stir welded joint are fine, the inventors considered that the amount of microscopic dislocations introduced in the welded portion may be correlated with average characteristics of a matrix. Based on this idea, the inventors conducted further studies to quantify the amount of microscopic dislocations introduced into the joined portion. As a result, the inventors discovered that when an average dislocation density of the joined portion becomes larger than an average dislocation density of the base metal by at least a certain amount, the ductility of the joined portion of the friction stir welded joint decreases, leading to a decrease in joint efficiency.

Based on the above discoveries, the inventors have conducted further studies and have come to the following discoveries. By appropriately controlling the ratio of the average dislocation density of the joined portion to the average dislocation density of the base metal, a friction stir welded joint having excellent joint efficiency is obtainable even when the material to be joined is mainly ferrite steel sheets. The present disclosure is based on these discoveries and further studies.

Primary features of the present disclosure are as follows.

1. A friction stir welded joint comprising two or more base metals (two or more base metal portions) and a joined portion of the base metals, wherein

an area fraction of ferrite of the base metals and an area fraction of ferrite of the joined portion are both 80 % or more, and
the relationship of the following Expression (1) is satisfied

$$Dw/Dm \leq 10.0 \qquad ...(1)$$

where
Dw is an average dislocation density of the joined portion per $m^2$, and
Dm is an average dislocation density of the base metals per $m^2$.

2. The friction stir welded joint according to 1, above, wherein the base metals each have a chemical composition, in mass%, of C: 0.1 % or less, Si: 2.0 % to 8.0 %, Al: 2.0 % or less, and Mn: 1.0 % or less.
3. The friction stir welded joint according to 1 or 2, above, wherein the average dislocation density of the joined portion is $1.0 \times 10^{16}/m^2$ or less.
4. The friction stir welded joint according to any one of 1 to 3, above, as a double-sided friction stir welded joint.

(Advantageous Effect)

According to the present disclosure, a friction stir welded joint that uses a mainly ferrite steel sheet as material to be joined and has excellent joint efficiency is obtainable. Further, the friction stir welded joint is advantageous in terms of manufacturability.

BRIEF DESCRIPTION OF THE DRAWINGS

In the accompanying drawings:

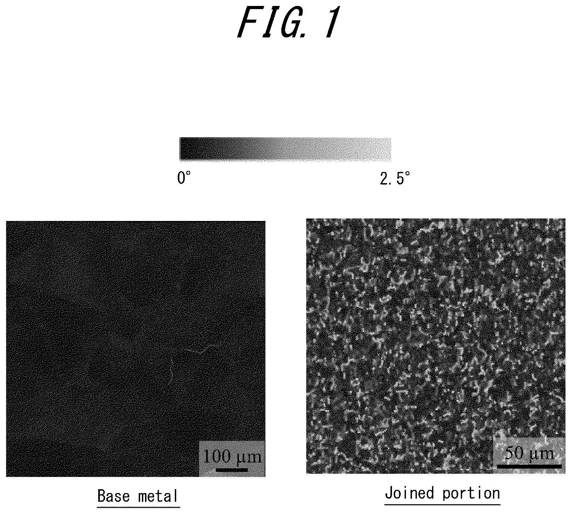

FIG. 1 is an example of KAM images of a base metal and a joined portion obtained by EBSD measurement.

DETAILED DESCRIPTION

The following describes embodiments of the present disclosure. First, a friction stir welded joint according to an embodiment of the present disclosure is described.
As mentioned above, a friction stir welded joint according to an embodiment of the present disclosure includes two or more base metals and a joined portion of the base metals (the joined portion joining the base metals).

[Base metal]

The base metal has a metallic microstructure that is mainly ferrite, specifically, a metallic microstructure structure in which an area fraction of ferrite is 80 % or more. Each base metal is a steel sheet as material to be joined.

The area fraction of ferrite of the base metal is 80 % or more. The area fraction of ferrite of the base metal is preferably 90 % or more. The area fraction of ferrite of the base metal may be 100 %. The area fraction of residual microstructure other than ferrite of the base metal is 20 % or less. The area fraction of residual microstructure of the base metal is preferably 10 % or less. The area fraction of residual microstructure of the base metal is more preferably 5 % or less. As the residual microstructure other than ferrite, examples include bainite, martensite, sulfides, nitrides, carbides, and the like. The area fraction of the residual microstructure of the base metal may be 0 %.

The area fraction of ferrite of the base metal is measured as follows. A test piece is taken from the base metal. Next, an observation plane of the test piece is polished and then etched with 3 vol% nital (a solution of nitric acid and ethanol) to reveal the microstructure. Then, photographs are taken using an optical microscope at a magnification of 40× to 500×. A total area of an observation region is preferably 50 $\mu$m square (50 $\mu$m × 50 $\mu$m) or more. From the obtained microstructure images, the area of ferrite is calculated using Adobe Photoshop, by Adobe Systems Inc. Next, the area of ferrite calculated for each field of view is divided by the total area of the observation region, and the result is multiplied by 100 to obtain the area fraction of ferrite. The area fraction of ferrite may be determined by EBSD measurement.

Further, the chemical composition of the base metal can be exemplified by a chemical composition that is, in mass%, C: 0.1 % or less, Si: 2.0 % to 8.0 %, Al: 2.0 % or less, and Mn: 1.0 % or less, with the balance being Fe and inevitable impurity. The inevitable impurity may be, for example, P: 0.2 % or less, S: 0.01 % or less, and N: 0.01 % or less. The chemical composition may optionally contain, in mass%, at least one selected from the group consisting of Cr: 1 % or less, Ni: 1 % or less, Cu: 1 % or less, Sn: 0.2 % or less, Sb: 0.2 % or less, Ca: 0.01 % or less, REM: 0.05 % or less, and Mg: 0.01 % or less. Elements other than Si and Fe may each be 0 mass%. The Si content is more preferably 5.0 mass% or less. The C content is more preferably 0.001 mass% or more. The Mn content and the Al content are each more preferably 0.01 mass% or more. Further, thickness of one base metal is preferably 0.2 mm to 3.2 mm.

The number of base metals joined at one joined portion may be two or more. The number of base metals joined at one joined portion may be, for example, two, or three to five. Further, the base metals joined at one joined portion may be the same or different in steel type and thickness as long as they are mainly ferrite steel sheets.

[Joined portion]

The joined portion is the region that has undergone hot working due to frictional heat and plastic flow between the rotating tool and the material to be joined, resulting in a recrystallized microstructure. The joined portion also has a metallic microstructure that is mainly ferrite, specifically, a metallic microstructure in which the area fraction of ferrite is 80 % or more.

The area fraction of ferrite of the joined portion is 80 % or more. The area fraction of ferrite of the joined portion is preferably 90 % or more. The area fraction of ferrite of the joined portion may be 100 %. The area fraction of the residual microstructure other than ferrite of the joined portion is 20 % or less. The area fraction of the residual microstructure of the joined portion is preferably 10 % or less. The area fraction of the residual microstructure of the joined portion is more preferably 5 % or less. As the residual microstructure other than ferrite, examples include martensite, sulfides, nitrides, carbides, and the like. The area fraction of the residual microstructure of the joined portion may be 0 %.

The area fraction of ferrite of the joined portion is measured, for example, as follows. The friction stir welded joint is cut in the thickness (vertical) direction so that a joint section (a plane that includes the perpendicular-to-joining direction and the thickness direction of the friction stir welded joint, where the perpendicular-to-joining direction is a direction perpendicular to both the joining direction and the thickness direction) becomes a cross-section. Next, a test piece is cut out so that a joint section of the joined portion becomes the observation plane. The observation plane of the test piece is then polished and etched with 3 vol% nital to reveal the microstructure. Then, photographs are taken using an optical microscope at a magnification of 40× to 500×. A total area of an observation region is preferably 50 $\mu$m square (50 $\mu$m × 50 $\mu$m) or more. From the obtained microstructure images, the area of ferrite is calculated using Adobe Photoshop, by Adobe Systems Inc. Next, the area of ferrite calculated for each field of view is divided by the total area of the observation region, and the result is multiplied by 100 to obtain the area fraction of ferrite. The area fraction of ferrite may be determined by EBSD measurement or the like.

Further, the base metal and the joined portion may be defined, for example, as follows. The friction stir welded joint is cut in the thickness (vertical) direction so that a joint section becomes the cross-section. The cross-section is then polished and etched with 3 vol% nital. Next, the cross-section is observed under an optical microscope, and the base metal and the joined portion are defined based on the degree of etching and the like.

In the friction stir welded joint according to an embodiment of the present disclosure, it is important to appropriately control the relative relationship between the average dislocation density of the joined portion and the average dislocation density of the base metal, and specifically to satisfy the relationship of the following Expression (1) regarding the ratio of the average dislocation density of the joined portion to the average dislocation density of the base metal.

$$Dw/Dm \leq 10.0 \qquad ...(1)$$

Here,

Dw is an average dislocation density of the joined portion per m$^2$, and
Dm is an average dislocation density of the base metal per m$^2$.
When the average dislocation density differs depending on the base metal, Dm is the smallest average dislocation density among the base metals joined by the joined portion.

As described above, microscopic dislocations introduced into the metallic microstructure of the joined portion during friction stir welding can be quantified by the average dislocation density, and excellent joint efficiency is obtainable by controlling the relative relationship between the average dislocation density of the joined portion and the average dislocation density of the base metal so as to satisfy the relationship of the Expression (1). Therefore, $Dw/Dm \leq 10.0$. Preferably, $Dw/Dm \leq 5.0$. More preferably, $Dw/Dm \leq 3.0$. A lower limit of Dw/Dm is not particularly limited, and may be, for example, $1.0 \leq Dw/Dm$.

Further, Dw is preferably, for example, $1.0 \times 10^{16}$/m$^2$ or less. Further, Dw is preferably $1.0 \times 10^{13}$/m$^2$ or more.

Here, the average dislocation density is determined by, for example, carrying out EBSD measurement and using the following expression.

$$D = 2KAMave \div (u \times |b|)$$

Here,

D is an average transition density per m$^2$,
KAMave is an average value of KAM value,
u is measurement interval in m, and
b is Burgers vector in m.

For example, the friction stir welded joint is cut in the thickness (vertical) direction so that a joint section becomes the cross-section, and a test piece is cut out so that the joint section of the base metal and the joined portion become the observation plane. Next, EBSD measurements are carried out to obtain local crystal orientation data of the base metal and the joined portion. The measurement interval (step size) is preferably 0.1 $\mu$m or more. The measurement interval is preferably 20 $\mu$m or less. Further, each measurement region is preferably 50 $\mu$m square (50 $\mu$m $\times$ 50 $\mu$m) or larger. Next, from the analysis results of the local crystal orientation data, the KAM value (the average value of the orientation differences between the measurement point and all adjacent measurement points) is determined for each measurement point, and the average value, KAMave, is calculated for each of the base metal and the joined portion. The average dislocation density of the base metal and the joined portion is then calculated. For reference, FIG. 1 illustrates an example of a KAM diagram of a base metal and a joined portion obtained by EBSD measurement for a friction stir welded joint obtained by friction stir welding using a mainly ferrite steel sheet as the material to be joined according to a conventional method.

The friction stir welded joint may be a single-sided friction stir welded joint, but is preferably a double-sided friction stir welded joint. Here, a single-sided friction stir welded joint is a joint in which material to be joined is joined by single-sided friction stir welding, in which a rotating tool is disposed on one side of the material to be joined. That is, a one-sided friction stir welded joint has a bead only on one joined portion surface in the thickness direction. A double-sided friction stir welded joint is a joint in which material to be joined is joined by double-sided friction stir welding, in which rotating tools are disposed on both the front and back surfaces of the material to be joined. That is, a double-sided friction stir welded joint has beads on both joined portion surfaces in the thickness direction.

Further, the friction stir welded joint according to an embodiment of the present disclosure may be a butt joint or a lap joint.

Further, in the friction stir welded joint according to an embodiment of the present disclosure, another base metal may be joined to the base metal via another joined portion. The type of the other joined portion is not particularly limited.

Further, the friction stir welded joint according to an embodiment of the present disclosure may be produced, for example, as follows.

First, two or more mainly ferrite steel sheets, specifically steel sheets having a metallic microstructure with an area fraction of ferrite of 80 % or more, are prepared as material to be joined. Here, the material to be joined constitutes the base metal after joining, and has the same metallic microstructure, chemical composition, thickness, and the like as the base metal described above. Accordingly, description is omitted here.

Next, the material to be joined is joined by friction stir welding. Joining conditions are not particularly limited, and a conventional method may be followed.

Examples of joining methods include butt joining and lap joining. In butt joining, end faces of the material to be joined are disposed opposite each other, and a rotating tool is pressed against a butted portion that includes the end faces (butting faces) of the material to be joined while being rotated. In this state, the rotating tool is moved in the joining direction to join the material to be joined. In lap joining, at least a portion of end portions of the material to be joined is overlapped, and a rotating tool is pressed against the overlapped portion while being rotated. In this state, the rotating tool is moved in the joining direction to join the material to be joined.

Next, in order to satisfy the relationship of Expression (1), the friction stir welded joint obtained as described above is subjected to post-heating under the following conditions.

An average heating rate in a temperature range from 100 °C to 700 °C (hereinafter also referred to as heating rate): 30 °C/s to 300 °C/s
Maximum arrival temperature: 710 °C to 1200 °C
Holding time at maximum arrival temperature (hereinafter also referred to as holding time): 0.1 s to 10 s
An average cooling rate in a temperature range of 700 °C to 100 °C (hereinafter also referred to as cooling rate): 30 °C/s to 300 °C/s

In addition, all temperatures mentioned here are based on a surface temperature of the joined portion of the friction stir welded joint. Further, it is preferable to control the heating rate, the holding time and the cooling rate within the above ranges on both sides of the joined portion of the friction stir welded joint.

Further, the method of post-heating is not particularly limited, and examples include high-frequency induction heating, laser irradiation, and gas heating. Furnace heating may be used.

Conditions other than those described above are not particularly limited, and a conventional method may be used.

EXAMPLES

As material to be joined, sets of two steel sheets each having the preferred chemical composition described above (in mass%, C: 0.1 % or less, Si: 2.0 % to 8.0 %, Al: 2.0 % or less, and Mn: 1.0 % or less, and some further containing at least one selected from the group consisting of Cr: 1 % or less, Ni: 0.5 % or less, Cu: 0.5 % or less, Sn: 0.2 % or less, Sb: 0.2 % or less, Ca: 0.01 % or less, REM: 0.05 % or less, and Mg: 0.01 % or less, with the balance being Fe and inevitable impurity), and a sheet thickness of 2.0 mm, were butted together and subjected to double-sided friction stir welding under the conditions listed in Table 1 to obtain friction stir welded joints. Next, the friction stir welded joints were subjected to post-heating under the conditions listed in Table 1. Conditions not specified were in accordance with the above descriptions or a conventional method. In each case, the joining conditions and post-heating conditions were approximately the same for both sides, so Table 1 lists only one as a representative example.

For the friction stir welded joints thus obtained, the area fractions of ferrite of the base metal and the joined portion, and Dw/Dm, were determined as described above. The results are listed in Table 1. In Table 1, when the area fractions of ferrite of the base metals joined at one joined portion were different, the value of the smaller area fraction of ferrite is listed as representative.

Further, the obtained friction stir welded joints were evaluated for joint efficiency. In the evaluation of joint efficiency, joint efficiency (= fracture strength of joined portion / fracture strength of base metal × 100) of over 90 % was evaluated as "excellent", and joint efficiency of 90 % or less was evaluated as "poor". The results are listed in Table 1.

The fracture strength of the joined portion was measured as follows. Test pieces having the same shape as the No. 1 test piece specified in JIS Z 3121 (2013) were collected from the obtained friction stir welded joints so that the joining direction and thickness direction were perpendicular to the longitudinal direction of the test pieces and the joined portion was located centrally in the parallel portion. Next, a tensile test was carried out in accordance with JIS Z 3121 (2013) using the collected test pieces, and a maximum test force (N) was determined. The maximum test force (N) thus determined was divided by the cross-sectional area ($mm^2$) of the parallel portion of the test piece, and the value was taken as the fracture strength of the joined portion.

Further, the fracture strength of the base metal may be referred to as the tensile strength (TS) of the base metal (material to be joined). That is, the fracture strength of the base metal may be measured by carrying out a tensile test in accordance with JIS Z 2241 (2022). For example, a JIS No. 5 test piece is collected from the base metal or the same material as the base metal. Next, a tensile test is carried out using the collected test piece at a crosshead speed of 10 mm/min to measure the tensile strength (TS). When the fracture strength differs depending on the base metal, the maximum fracture strength of each base metal was used in evaluating the joint efficiency.

[Table 1]

[Table 1]

Table 1

| No. | Joining conditions | | Post-Heating conditions | | | | Friction stir welded joint | | | Evaluation result | Remarks |
|---|---|---|---|---|---|---|---|---|---|---|---|
| | Rotational speed rpm | Joining speed m/min | Heating rate °C/s | Maximum arrival temperature °C | Holding time s | Cooling rate °C/s | Base metal α area fraction % | Joined portion α area fraction % | Dw/Dm | Joint efficiency | |
| 1 | 2000 | 6 | 50 | 830 | 2 | 93 | 90 | 90 | 9.9 | Excellent | Example |
| 2 | 2000 | 6 | 25 | 400 | 11 | 28 | 90 | 90 | 11.2 | Poor | Comparative Example |
| 3 | 1500 | 4.5 | 113 | 900 | 10 | 131 | 95 | 91 | 7.3 | Excellent | Example |
| 4 | 1500 | 4.5 | 110 | 500 | 1 | 103 | 95 | 94 | 12.1 | Poor | Comparative Example |
| 5 | 1500 | 4.5 | - | - | - | - | 95 | 93 | 13.2 | Poor | Comparative Example |
| 6 | 3000 | 10 | 270 | 1010 | 0.1 | 280 | 100 | 100 | 1.1 | Excellent | Example |
| 7 | 3000 | 10 | 150 | 900 | 3 | 134 | 100 | 100 | 6.2 | Excellent | Example |
| 8 | 3000 | 10 | 40 | 840 | 5 | 50 | 100 | 100 | 9.8 | Excellent | Example |
| 9 | 3000 | 10 | 50 | 600 | 2 | 50 | 100 | 100 | 11.0 | Poor | Comparative Example |
| α area fraction: ferrite area fraction | | | | | | | | | | | |

As indicated in Table 1, for the Examples, friction stir welded joints that used mainly ferrite steel sheets as material to be joined and had excellent joint efficiency were obtained. In contrast, for the Comparative Examples, sufficient joint efficiency was not obtained.

Further, for separately produced friction stir welded joints that were butt joints and lap joints using various mainly ferrite steel sheets (various steel sheets having the preferred chemical composition and thicknesses of 0.2 mm to 3.2 mm) as the material to be joined (that is, the area fraction of ferrite of the base metal and the area fraction of ferrite of the joined portion were both 80 % or more), excellent joint efficiency was obtained similarly to the above when Dw/Dm satisfied Expression (1).

**Claims**

1.  A friction stir welded joint comprising two or more base metals and a joined portion of the base metals, wherein

    an area fraction of ferrite of the base metals and an area fraction of ferrite of the joined portion are both 80 % or more, and
    the relationship of the following Expression (1) is satisfied

$$Dw/Dm \leq 10.0 \qquad \ldots(1)$$

    where
    Dw is an average dislocation density of the joined portion per $m^2$, and
    Dm is an average dislocation density of the base metals per $m^2$.

2.  The friction stir welded joint according to claim 1, wherein the base metals each have a chemical composition, in mass%, of C: 0.1 % or less, Si: 2.0 % to 8.0 %, Al: 2.0 % or less, and Mn: 1.0 % or less.

3.  The friction stir welded joint according to claim 1 or 2, wherein the average dislocation density of the joined portion is $1.0 \times 10^{16}/m^2$ or less.

4.  The friction stir welded joint according to claim 1 or 2, as a double-sided friction stir welded joint.

5.  The friction stir welded joint according to claim 3, as a double-sided friction stir welded joint.

## FIG. 1

0°                                        2.5°

Base metal                Joined portion

## INTERNATIONAL SEARCH REPORT

| | International application No. |
|---|---|
| | **PCT/JP2024/019446** |

**A. CLASSIFICATION OF SUBJECT MATTER**

***B23K 20/12***(2006.01)i; ***C22C 38/00***(2006.01)i; ***C22C 38/60***(2006.01)i
FI: B23K20/12 360; C22C38/60; C22C38/00 301B

According to International Patent Classification (IPC) or to both national classification and IPC

**B. FIELDS SEARCHED**

Minimum documentation searched (classification system followed by classification symbols)

B23K20/12; C22C38/00; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/100420 A1 (JFE STEEL CORPORATION) 08 June 2023 (2023-06-08)<br>entire text, all drawings | 1-5 |
| A | JP 2015-57292 A (OSAKA UNIVERSITY) 26 March 2015 (2015-03-26)<br>entire text, all drawings | 1-5 |
| A | US 2011/0240372 A1 (SMITH INTERNATIONAL ) 06 October 2011 (2011-10-06)<br>entire text, all drawings | 1-5 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/019446**

| Patent document cited in search report | Publication date (day/month/year) | Patent family member(s) | Publication date (day/month/year) |
|---|---|---|---|
| WO 2023/100420 A1 | 08 June 2023 | (Family: none) | |
| JP 2015-57292 A | 26 March 2015 | (Family: none) | |
| US 2011/0240372 A1 | 06 October 2011 | GB 2492510 A<br>WO 2011/123628 A2<br>CA 2793799 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019166569 A